# EUROPEAN PATENT SPECIFICATION

(11) **EP 3 561 993 B1**
(45) Date of publication and mention of the grant of the patent: **23.06.2021**
(21) Application number: 18465516.5
(22) Date of filing: 23.04.2018
(51) Int. Cl.: H02J 7/00, H02J 7/02

(54) **WIRELESS CHARGER**
DRAHTLOSES LADEGERÄT
CHARGEUR SANS FIL

(43) Date of publication of application: 30.10.2019
(73) Proprietor: Continental Automotive GmbH, 30165 Hannover (DE)
(72) Inventor: Craciun, Serban, 300687 Timisoara (RO); Ionescu, Ioana Sabina, 331042 Hunedoara (RO)
(74) Representative: Continental Corporation

(56) References cited:
- US-A1- 2016 181 860

## Description

The invention is concerned with a wireless charger.

US 2016/181860 A1 discloses a wireless charger.

A multifunctional smartphone terminal (MFST) can comprise a wireless charger for charging a smartphone. The wireless charger is an inductive charger with a wireless charger circuit, comprising a charging coil for generating a magnetic field. In order to supply the charging coil with a predefined voltage, the charging coil may be connected to an H bridge which provides an AC (alternating current) voltage at a fixed frequency. A wireless charging function and a communication with a vehicle may be performed by a control circuit of the wireless charger. The control unit is usually supplied with a low voltage supply of 3.3 V, provided by an integrated circuit. The integrated circuit can be a system basis chip with an internal linear regulator. The system basis chip itself is usually connected to a battery of the vehicle. To operate the system basis chip, it is necessary to convert the voltage of the battery to an operation voltage. For this reason, a step down pre-regulator can be integrated in the integrated circuit, e.g. the system basis chip. The operation of the stepdown pre-regulator is accompanied by a power dissipation.

For a wireless charger designed for the medium power range around 15 W, the power dissipation can go up to 2.5 W, when the battery voltage is around 14 V. This reduces the efficiency of the wireless charger. In addition, the integration of the pre-regulator in a system basis chip increases the costs of the wireless charger.

It is an object of the present invention to provide a solution to decrease the power dissipation of a wireless charger.

The object is accomplished by the subject matter of the independent claims. Advantageous developments with convenient and non-trivial further embodiments of the invention are specified in the following description, the dependent claims and the figures.

In accordance with the object of the present invention, a wireless charger is provided, the wireless charger comprising an energy supply connector, a main step down converter for powering a wireless charger circuit, a control circuit for controlling the wireless charger circuit and the main step down converter and an integrated circuit for powering the control circuit. An input connector of the main step down converter is connected to the energy supply connector and an output connector of the stepdown converter is connected to an input connector of the integrated circuit through or via a series diode. The input connector of the integrated circuit is connected to the energy supply connector through or over a switch element. The switch element is controlled by the control circuit. The control circuit is designed to set the switch element to an ON-state or an OFF-state. The control circuit is designed to set the switch element to the OFF-state, when or if an OFF-criterion is fulfilled, and to set the switch element to the ON-state, when or if an ON-criterion is fulfilled.

The OFF-criterion comprises, that an output voltage of the main step down converter is above a predefined threshold value, and the ON-criterion comprises, that the output voltage of the main step down converter is below the predefined threshold value.

In other words, the wireless charger comprises the energy supply connector, which may be connected to an output connector of a battery. The wireless charger comprises the main stepdown converter which is designed for supplying the wireless charger circuit with a pre-defined voltage. The wireless charger circuit is designed for wirelessly transmitting power to a device, e.g. a smartphone. The transmission is based on electromagnetic induction. The wireless charger also comprises the control circuit for controlling the wireless charger circuit and the output voltage of the stepdown converter. The integrated circuit is designed for providing a supply voltage to the control circuit. The integrated circuit comprises an input connector that is connected to the energy supply connector through the switch element. The input connector of the integrated circuit is also connected to the output connector of the main stepdown converter through a series diode. The series diode is designed to have an asymmetric conductance, allowing a current to flow in just one direction from the main stepdown converter to the integrated circuit. The switch element can be set to the ON-state or to the OFF-state by the control circuit. In the ON-state, the switch element is conducting and the input connector of the integrated circuit is thus connected to the energy supply connector. In the OFF-state, the switch element is not conducting and the input connector of the integrated circuit is thus disconnected from the energy supply connector. When the OFF-criterion is fulfilled, the switch element is set to the OFF-state by the control circuit. When the ON-criterion is fulfilled, the switch element set to the ON-state by the control circuit.

The wireless charger may be an inductive charger of a multifunctional smartphone terminal. The energy supply connector may be connected to a battery for receiving electric power from the battery. The main stepdown converter may be a stepdown converter for powering the wireless charger circuit. The control circuit may be designed for controlling the wireless charger circuit, involving a regulation of a frequency of a magnetic field, generated by a charging coil of the wireless charger circuit and the determination of the output voltage of the main stepdown converter. In order to define the output voltage of the main stepdown converter, the control circuit may provide an adjustment voltage to the main stepdown converter which sets the output voltage of the main stepdown converter. The integrated circuit may be designed for supplying a predefined voltage to the control circuit. The integrated circuit is supplied at the input connector of the integrated circuit. The input connector of the integrated circuit is connected to the energy supply connector, through the switch element. The switch element may be a transistor. The control circuit is control the switch element for example by providing a gate voltage to the switch element. When the OFF-criterion is fulfilled, the control circuit is set the switch element to the OFF-state, in which the switch element is in a non-conducting state. When the ON-criterion is fulfilled, the control circuit is set the switch element to the ON-state, in which the switch element is in a conducting state. When the switch element is in the ON-state, the input connector of the integrated circuit is directly electrically connected to the energy supply connector. In this situation, a voltage of the energy connector is provided at the input connector of the integrated circuit. When the switch element is in the OFF-state, the input connector of the integrated circuit may be supplied by the output of the stepdown converter. In this situation, the output voltage of the main step down converter is provided at the input connector of the integrated circuit.

The invention gives the advantage, that the integrated circuit can be supplied either by the energy supply connector directly or by the output connector of the stepdown converter, depending on the state of the switching element.

The invention also comprises embodiments that provide features which afford additional technical advantages.

According to the invention, the OFF-criterion comprises, that an output voltage of the main stepdown converter is above a predefined threshold value, and the ON-criterion comprises, that the output voltage of the main stepdown converter is below the predefined threshold value.

In other words, a criterion of the OFF-criterion is fulfilled, when the output voltage of the main stepdown converter is above the predefined threshold value, and a criterion of the ON-criterion is fulfilled, when the output voltage of the main stepdown converter is below the predefined threshold value.

This embodiment has the advantage, that the integrated circuit is supplied by the main stepdown converter, when the main stepdown converter provides a suitable output voltage.

As an example, the threshold value can be defined in such a way that the integrated circuit may be supplied by the main stepdown converter, when the output voltage of the main stepdown converter is high enough to operate the integrated circuit. Otherwise, when the output voltage of the main stepdown converter is not high enough, the integrated circuit may be supplied by the energy supply connector. The control circuit is designed to compare the output voltage of the main stepdown converter with the threshold voltage, as the output voltage of the main stepdown converter is related to the adjustment voltage, provided by the control circuit to control the output voltage of the main stepdown converter.

According to a further embodiment, the predefined threshold value is in a range of 6 V to 7.5 V.

In other words, the switch element is set to an ON-state when the output voltage of the main stepdown converter is below the threshold value, wherein the threshold value is between 6 V and 7.5 V. The switch element is set to an OFF-state, when the output voltage of the main stepdown converter is above the threshold value.

This embodiment has the advantage, that the predefined threshold value, is consistent with a voltage, necessary to operate the integrated circuit.

In other words, the state of the switch element depends on a state of the wireless charger circuit. The OFF-criterion comprises, that the wireless charger circuit is in a state of charging. The ON-criterion comprises, that the wireless charger circuit is not in a state of charging or in a predefined state at the beginning of the charging state, when the charging state is initialised or prepared.

This embodiment has the advantage, that the integrated circuit is supplied by the main stepdown converter, when the stepdown converter is on, as the state of the stepdown converter depends on the state of the wireless charger circuit.

As an example, the main stepdown converter may not provide an output voltage during the initialising state of the wireless charger circuit and during the idle state of the wireless charger circuit. In this situation, the integrated circuit may not be supplied by the main step down converter. It may be necessary to supply the energy directly from the energy supply connector. As the stepdown converter may be controlled by the control circuit, the control circuit may therefore switch the switch element to an ON-state in order to couple the integrated circuit with the energy supply connector. When the main stepdown converter is active or providing energy to the charger circuit, the control circuit may set the switch element to an OFF-state. This way, the integrated circuit may be supplied by the main stepdown converter.

According to a further embodiment, the integrated circuit comprises an internal linear regulator. This gives the advantage, that the integrated circuit may be designed to provide a predefined voltage to the control circuit. As an example, the integrated circuit of the internal linear regulator may be designed on the basis of a Zener diode which is designed to provide a stabilized predefined voltage for the control circuit.

According to a further embodiment, the integrated circuit comprises a pre-regulator. This embodiment has the advantage, that the voltage supplied at the input connector of the integrated circuit may be converted to a voltage, required by the integrated circuit. As an example, the pre-regulator may be designed on the basis of a stepdown converter, converting the voltage, supplied at the input connector of the integrated circuit to a lower voltage.

According to a further embodiment, the integrated circuit is a system basis chip. In other words, the integrated circuit is designed as a system basis chip. This embodiment has the advantage, that it is possible to include multiple control units in the integrated circuit. As an example, the integrated circuit may comprise several automotive control units that may be designed to provide functions like bus interfaces or standby modes.

According to a further embodiment, the switch element is a transistor. This embodiment has the advantage, that the switch element is a small electronic device. As an example the switch element may be a PMOS transistor comprising a source connector, a gate connector and a drain connector. The source connector may be connected to the power supply connector. The drain connector may be connected to the integrated circuit connector. The gate connector may be connected to the control circuit. The PMOS transistor may be set to the ON-state or the OFF-state by the control circuit. This may be possible by applying a gate voltage at the gate connector. The applied gate voltage may influence the resistance of the PMOS transistor. The transistor may be conducting or non-conducting, when no gate voltages supplied.

According to a further embodiment, the wireless charger circuit is designed to deliver a power between 10 W to 20 W. In other words, the wireless charger circuit is designed to provide a magnetic field which is necessary to deliver a power between 10 to 20 W to a receiver. This embodiment has the advantage that the wireless charger circuit is suitable to charge mobile phone, as it complies with the related standards. For example, the wireless charger circuit may provide a magnetic field, using a charging coil with a frequency of 110 kHz.

According to a further embodiment, the control circuit comprises a programmable shunt regulator. This embodiment has the advantage that the threshold voltage may define by using shunt regulator with external resistors. As an example, the control circuit may comprise a TL 431 shunt regulator (Texas Instruments), comprising an anode connector a cathode connector and a reference connector. The anode connector may be grounded. The reference connector may be connected to the output connector of the main stepdown converter.

The invention also providers a vehicle, comprising a wireless charger of one of the embodiments as described above.

The invention also provides a method for operating a wireless charger comprising an energy supply connector, a main step down converter for supplying a wireless charger circuit, a control circuit for controlling the wireless charger circuit and the main step down converter, an integrated circuit for supplying the control circuit, wherein an input connector of the step down converter is connected to the energy supply connector and an output connector of the step down converter is connected to an input connector of the integrated circuit through a series diode. The input connector of the integrated circuit is also connected to the energy supply connector through a switch element and the switch element is controlled by the control circuit.

In a first step, the control circuit checks, whether an OFF-criterion or an ON-criterion is fulfilled. In a next step, the control circuit sets the switch element to an OFF-state, when the OFF-criterion is fulfilled. Otherwise, the control circuit sets the switch element to an ON-state, when the ON-criterion is fulfilled.

In the following an exemplary implementation of the invention is described. The figures show:
- Fig. 1: a schematic illustration of an embodiment of a wireless charger according to the prior art;
- Fig. 2: a schematic illustration of an embodiment of the wireless charger; and
- Fig. 3: a schematic illustration of an embodiment of the method for operating a wireless charger.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

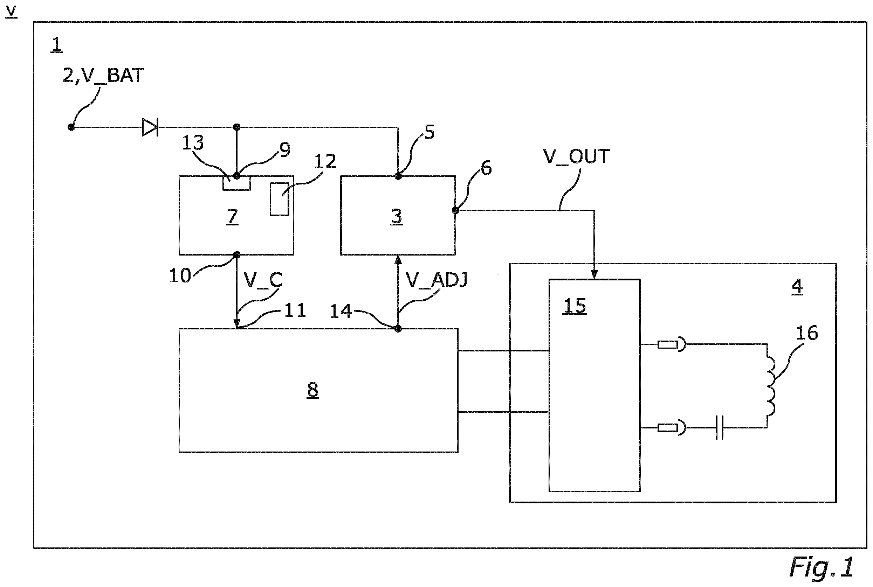

Fig. 1 shows a schematic illustration of an embodiment of a wireless charger according to the state of the art. The wireless charger 1 may be arranged in a vehicle v. The wireless charger 1 comprises an energy supply connector 2. The energy supply connector 2 may be a connector of a battery or a generator. The wireless charger 1 comprises a main step down converter 3. The main stepdown converter 3 may be designed to supply a wireless charger circuit 4. The main stepdown converter 3 comprises an input connector 5 that may be connected to the energy supply connector 2. The main stepdown converter 3 comprises an output connector 6, connected to the wireless charger circuit 4. The wireless charger 1 comprises the integrated circuit 7. The integrated circuit 7 may be designed to supply the control circuit 8 with the defined controller voltage V_C. The input connector of the integrated circuit 9 may be connected to the energy supply connector 2. The output connector of the integrated circuit 10 may be connected to an input connector of the control circuit 11 the integrated circuit 7 may be a system basis chip. The integrated circuit 7 may comprise an internal linear regulator 12 to change the controller voltage V_C, delivered to the control circuit 8. The integrated circuit 7 may comprise a pre-regulator 13 which may be an internal step down regulator which is designed to transform the voltage V_BAT received from the energy supply connector 2 to a voltage, necessary to drive the integrated circuit 7. The control unit 8 may be designed to control the main step down converter 3 by providing an adjustment voltage V_ADJ at an output connector 14, which is connected to the main step down converter 3. The wireless charger circuit 4 may provide an H bridge 15, which may be connected to the output connector of the main stepdown converter 6. The H bridge 15 may be supplied by the main stepdown converter 3 with the output voltage V_OUT between 2 V and 12 V. The H bridge 15 may be controlled by the control circuit 8. The H bridge 15 may provide an AC current to the charging coil 16. The energy supply voltage V_BAT, supplied by the energy supply connector 2 may have a DC voltage of 12 to 14 Volts. The controller voltage V_C delivered to the control circuit 8 by the integrated circuit 7 may have a voltage of 3.3 V to 4.0 V. The main stepdown converter 3 may be designed to provide the output voltage V_OUT between 7 and 8 V. The wireless charger circuit 4 may be designed to provide a power of 10 to 20 W to a device. The pre-regulator 13 may have a power dissipation around 1.5 W to 2.5 W.

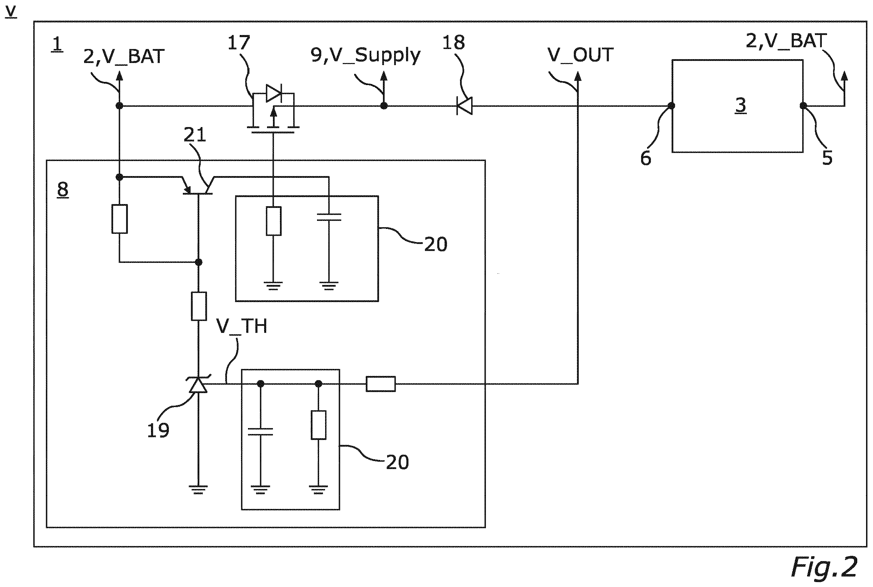

Fig. 2 shows a schematic illustration of an embodiment of a wireless charger. The energy supply connector 2 may be connected to the connector of the integrated circuit 9 over the switch element 17. Switch element 17 may be a transistor, for example a PMOS transistor. The switch element 17 is in an ON-state or in an OFF-state. In the ON-state, the switch element 17 is conducting so that the energy supply connector is connected to the input connector of the integrated circuit 7. In the OFF-state, the switch element 17 is non-conducting. The switch element 17 is controlled by the control circuit 8. The input connector 5 of the main stepdown converter 3 is connected to the energy supply connector 2. The output connector 6 of the main step down converter 3 is connected to the input connector 9 of the integrated circuit over the series diode 18. The series diode 18 is designed for conducting the cure and from the output connector 6 to the input connector of the integrated circuit. The series diode 18 is designed to be non-conducting for a current flowing from the input connector 9 of the integrated circuit to the output connector 6 of the main step down converter 3. When the main step down converter 3 provides the output voltage V_OUT at the output connector 6, the supply voltage V_SUPPLY at the input connector of the integrated circuit 9 is equal to the output voltage V_OUT. When the main step down converter 3 provides no output voltage V_OUT at the output connector of 6 and the switch element 17 is in an ON-state, the supply voltage V_SUPPLY at the input connector of the integrated circuit 9 is equal to the energy supply voltage V_BAT. The control circuit 8 is configured to select the state of the switch element 17 depending on the ON-criterion and the OFF-criterion. When the ON-criterion is fulfilled, the control circuit 8 switches the switch element 17 to the ON-state. When the OFF-criterion is fulfilled, the control circuit 8 switches the switch element 17 to the OFF-state. The ON-criterion comprises, that the output voltage V_OUT of the main stepdown converter 3 is below the predefined threshold value V_TH. The OFF-criterion comprises, that the output voltage V_OUT of the main stepdown converter 3 is above the predefined threshold value V_TH. The predefined threshold value V TH is in the range of 6 V to 7.5 V. The OFF-criterion comprises, that the wireless charger circuit 4 is in the charging state. The ON-criterion comprises, that the wireless charger circuit for this in the idle state or in the initialising state. The wireless charger circuit 4 is designed to deliver 10 W to 20 W.

The control circuit 8 provides the adjustment voltage V_ADJ at the control circuit output connector 14 in order to control the output voltage V_OUT of the main stepdown converter 3. The control circuit 8 is designed to determine or measure the output voltage V_OUT. The control circuit comprises a programmable shunt regulator 19 like a TL431 (Texas Instruments). The programmable shunt is connected to the output connector 6 of the main stepdown converter 3, a ground and the circuit connected to the energy supply connector 2. The control circuit comprises damping circuits 20 that comprise a grounded capacitor and a grounded resistor.

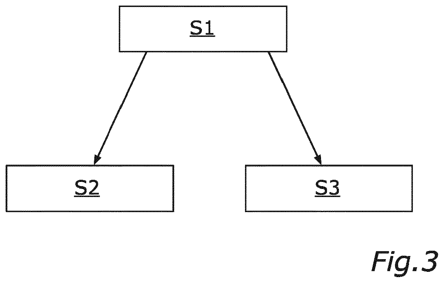

Fig. 3 shows a schematic illustration of an embodiment of the method for operating a wireless charger.

The wireless charger 1 comprises an energy supply connector 2, a main step down converter 3 for supplying a wireless charger circuit 4, a control circuit 8 for controlling the wireless charger circuit 4 and the main step down converter 3, an integrated circuit 7 for supplying the control circuit 8 , wherein the input connector of the step down converter 5 may be connected to the energy supply connector 2 and the output connector of the step down converter 6 is connected to the input connector of the integrated circuit 9 through the series diode 18 and the input connector of the integrated circuit 9 is connected to the energy supply connector 2 through the switch element 17. The switch element 17 is controlled by the control circuit 8. In the first step, the control circuit 8 checks, whether the ON-criterion or the OFF-criterion is fulfilled (S1). When the ON-criterion on is fulfilled, the control circuit 8 sets the switch element 17 to the ON-state (S2). When the OFF-criterion is fulfilled, the control circuit 8 sets the switch element 17 to the OFF-state (S3) .

Overall, the example shows how a solution to decrease the power dissipation of the wireless charger is provided by the invention.

### Reference signs

- 1: wireless charger
- 2: energy supply connector
- 3: main stepdown converter
- 4: wireless charger circuit
- 5: input connector of the main step down converter
- 6: output connector of the main stepdown converter
- 7: integrated circuit
- 8: control circuit
- 9: input connector of the integrated circuit
- 10: output connector of the integrated circuit
- 11: input connector of the control circuit
- 12: internal linear regulator
- 13: pre-regulator
- 14: output connector of the control circuit
- 15: H bridge
- 16: charging coil
- 17: switch element
- 18: series diode
- 19: programmable shunt regulator
- 20: damping circuit
- 21: diode

- V_OUT: output voltage
- V_TH: threshold value
- V_ADJ: adjustment voltage
- V_C: controller voltage
- V_SUPPLY: supply voltage
- V_BAT: battery voltage

## Claims

1. A wireless charger (1) comprising an energy supply connector (2), a main step down converter (3) configured to power a wireless charger circuit (4), a control circuit (8) for controlling the wireless charger circuit (4) and the main step down converter (3), an integrated circuit (7) configured to power the control circuit (8), an input connector of the step down converter (5) is connected to the energy supply connector (2) and **characterized in that** an output connector of the step down converter (6) is connected to an input connector of the integrated circuit (9) through a series diode (18), the input connector of the integrated circuit (9) is connected to the energy supply connector (2) through a switch element (17), and
the switch element (17) is controlled by the control circuit (8), wherein
the control circuit (8) is designed to set the switch element (17) to an OFF-state, when an OFF-criterion is fulfilled, and the control circuit (8) is designed to set the switch element (17) to an ON-state, when an ON-criterion is fulfilled and that the OFF-criterion comprises, that an output voltage of the main step down converter (V_OUT) is above a predefined threshold value (V_TH), and
the ON-criterion comprises, that the output voltage of the main step down converter (V_OUT) is below the predefined threshold value(V_TH).

2. The wireless charger (1) of claim 1, wherein the predefined threshold value (V_TH) is in the range of 6 V to 7.5 V.

3. The wireless charger (1) as claimed in any preceding claim, wherein the integrated circuit (7) comprises an internal linear regulator (12).

4. The wireless charger (1) as claimed in any preceding claim, wherein the integrated circuit (7) comprises a pre-regulator (13).

5. The wireless charger (1) as claimed in any preceding claim, wherein the integrated circuit (7) is a system basis chip.

6. The wireless charger (1) as claimed in any preceding claim, wherein the switch element (17) is a transistor.

7. The wireless charger (1) as claimed in any preceding claim, wherein the wireless charger circuit (4) is designed to deliver a power of 10 W to 20 W.

8. The wireless charger (1) as claimed in any preceding claim, wherein the control circuit (8) comprises a programmable shunt regulator (19).

9. A vehicle, comprising a wireless charger (1) as claimed in any one of claims 1 to 8.

10. A method for operating a wireless charger (1) as claimed in any one of claims 1 to 8, wherein the wireless charger (1) comprises an energy supply connector (2), a main step down converter (3) for supplying a wireless charger circuit (4), a control circuit (8) for controlling the wireless charger circuit (4) and the main step down converter (3), an integrated circuit (7) for supplying the control circuit (8), wherein an input connector of the step down converter (5) is connected to the energy supply connector (2) and an output connector of the step down converter (6) is connected to an input connector of the integrated circuit (9) through a series diode 18), **characterized in that** the input connector of the integrated circuit (9) is connected to the energy supply connector (2) through a switch element (17), and the switch element (17)is controlled by the control circuit (8),
**with** the steps:
- checking whether an ON-criterion or an OFF-criterion is fulfilled (S1);
- setting the switch element (17) to an OFF-state by the control circuit (8), when the OFF-criterion is fulfilled (S2); and
setting the switch element (17) to an ON-state by the control circuit (8), when the ON-criterion is fulfilled,
wherein the OFF-criterion comprises, that an output voltage of the main step down converter (V_OUT) is above a predefined threshold value (V_TH), and
the ON-criterion comprises, that the output voltage of the main step down converter (V_OUT) is below the predefined threshold value(V_TH).

## Patentansprüche

1. Drahtlosladevorrichtung (1), die einen Energieversorgungsverbinder (2), einen Hauptabspannumsetzer (3), der konfiguriert ist, eine Drahtlosladeschaltung (4) mit Energie zu versorgen, eine Steuerschaltung (8) zum Steuern der Drahtlosladeschaltung (4) und des Hauptabspannumsetzers (3), eine integrierte Schaltung (7), die konfiguriert ist, die Steuerschaltung (8) mit Energie zu versorgen, umfasst,
wobei ein Eingangsverbinder (5) des Abspannumsetzers mit dem Energieversorgungsverbinder (2) verbunden ist, und
**dadurch gekennzeichnet, dass**
ein Ausgangsverbinder (6) des Abspannumsetzers durch eine in Reihe geschaltete Diode (18) mit einem Eingangsverbinder (9) der integrierten Schaltung verbunden ist,
der Eingangsverbinder (9) der integrierten Schaltung durch ein Schalterelement (17) mit dem Energieversorgungsverbinder (2) verbunden ist, und
das Schalterelement (17) durch die Steuerschaltung (8) gesteuert wird, wobei
die Steuerschaltung (8) ausgelegt ist, das Schalterelement (17) auf einen AUS-Zustand einzustellen, wenn ein AUS-Kriterium erfüllt ist, und die Steuerschaltung (8) ausgelegt ist, das Schalterelement (17) auf einen EIN-Zustand einzustellen, wenn ein EIN-Kriterium erfüllt ist,
und dass das AUS-Kriterium umfasst, dass eine Ausgangsspannung des Hauptabspannumsetzers (V_OUT) über einem im Voraus definierten Schwellenwert (V_TH) liegt, und
das EIN-Kriterium umfasst, dass die Ausgangsspannung des Hauptabspannumsetzers (V_OUT) unter dem im Voraus definierten Schwellenwert (V_TH) liegt.

2. Drahtlosladevorrichtung (1) nach Anspruch 1, wobei der im Voraus definierte Schwellenwert (V_TH) im Bereich von 6 V bis 7,5 V liegt.

3. Drahtlosladevorrichtung (1) nach einem der vorhergehenden Ansprüche, wobei die integrierte Schaltung (7) einen linearen Integralregulierer (12) umfasst.

4. Drahtlosladevorrichtung (1) nach einem der vorhergehenden Ansprüche, wobei die integrierte Schaltung (7) einen Vorregulierer (13) umfasst.

5. Drahtlosladevorrichtung (1) nach einem der vorhergehenden Ansprüche, wobei die integrierte Schaltung (7) ein Systembasischip ist.

6. Drahtlosladevorrichtung (1) nach einem der vorhergehenden Ansprüche, wobei das Schalterelement (17) ein Transistor ist.

7. Drahtlosladevorrichtung (1) nach einem der vorhergehenden Ansprüche, wobei die Drahtlosladeschaltung (4) ausgelegt ist, eine Leistung im Bereich von 10 W bis 20 W zu liefern.

8. Drahtlosladevorrichtung (1) nach einem der vorhergehenden Ansprüche, wobei die Steuerschaltung (8) einen programmierbaren Nebenschlussregulierer (19) umfasst.

9. Fahrzeug, das eine Drahtlosladevorrichtung (1) nach einem der Ansprüche 1 bis 8 umfasst.

10. Verfahren zum Betreiben einer Drahtlosladevorrichtung (1) nach einem der Ansprüche 1 bis 8, wobei die Drahtlosladevorrichtung (1) einen Energieversorgungsverbinder (2), einen Hauptabspannumsetzer (3) zum Versorgen einer Drahtlosladeschaltung (4), eine Steuerschaltung (8) zum Steuern der Drahtlosladeschaltung (4) und des Hauptabspannumsetzers (3) und eine integrierte Schaltung (7) zum Versorgen der Steuerschaltung (8) umfasst, wobei ein Eingangsverbinder (5) des Abspannumsetzers mit dem Energieversorgungsverbinder (2) verbunden ist und ein Ausgangsverbinder (6) des Abspannumsetzers durch eine in Reihe geschaltete Diode (18) mit einem Eingangsverbinder (9) der integrierten Schaltung verbunden ist,
**dadurch gekennzeichnet, dass**
der Eingangsverbinder (9) der integrierten Schaltung durch ein Schalterelement (17) mit dem Energieversorgungsverbinder (2) verbunden ist und das Schalterelement (17) durch die Steuerschaltung (8) gesteuert wird,
mit den folgenden Schritten:
- Prüfen, ob ein EIN-Kriterium oder ein AUS-Kriterium erfüllt ist (S1);
- Einstellen des Schalterelements (17) auf einen AUS-Zustand durch die Steuerschaltung (8), wenn das AUS-Kriterium erfüllt ist (S2); und
Einstellen des Schalterelements (17) auf einen EIN-Zustand durch die Steuerschaltung (8), wenn das EIN-Kriterium erfüllt ist,
wobei
das AUS-Kriterium umfasst, dass eine Ausgangsspannung des Hauptabspannumsetzers (V_OUT) über einem im Voraus definierten Schwellenwert (V_TH) liegt, und
das EIN-Kriterium umfasst, dass die Ausgangsspannung des Hauptabspannumsetzers (V_OUT) unter dem im Voraus definierten Schwellenwert (V_TH) liegt.

## Revendications

1. Chargeur sans fil (1) comprenant un connecteur d'alimentation en énergie (2), un convertisseur abaisseur principal (3) configuré pour alimenter un circuit de chargeur sans fil (4), un circuit de commande (8) pour commander le circuit de chargeur sans fil (4) et le convertisseur abaisseur principal (3), un circuit intégré (7) configuré pour alimenter le circuit de commande (8),
un connecteur d'entrée du convertisseur abaisseur (5) est connecté au connecteur d'alimentation en énergie (2) et **caractérisé en ce qu'**un connecteur de sortie du convertisseur abaisseur (6) est connecté à un connecteur d'entrée du circuit intégré (9) par l'intermédiaire d'une diode série (18),
le connecteur d'entrée du circuit intégré (9) est connecté au connecteur d'alimentation en énergie (2) par l'intermédiaire d'un élément de commutation (17), et
l'élément de commutation (17) est commandé par le circuit de commande (8), où :
le circuit de commande (8) est conçu pour mettre l'élément de commutation (17) dans un état OFF, lorsqu'un critère OFF est satisfait, et le circuit de commande (8) est conçu pour mettre l'élément de commutation (17) dans un état ON, lorsqu'un critère ON est satisfait,
et le critère OFF comprend qu'une tension de sortie du convertisseur abaisseur principal (V_OUT) soit supérieure à une valeur seuil prédéfinie (V_TH), et
le critère ON comprend que la tension de sortie du convertisseur abaisseur principal (V_OUT) soit inférieure à la valeur seuil prédéfinie (V_TH).

2. Chargeur sans fil (1) selon la revendication 1, dans lequel la valeur seuil prédéfinie (V_TH) se situe dans la plage s'étendant de 6 V à 7,5 V.

3. Chargeur sans fil (1) tel que revendiqué dans l'une quelconque des revendications précédentes, dans lequel le circuit intégré (7) comprend un régulateur linéaire interne (12).

4. Chargeur sans fil (1) tel que revendiqué dans l'une quelconque des revendications précédentes, dans lequel le circuit intégré (7) comprend un prérégulateur (13) .

5. Chargeur sans fil (1) tel que revendiqué dans l'une quelconque des revendications précédentes, dans lequel le circuit intégré (7) est une puce de base de système.

6. Chargeur sans fil (1) tel que revendiqué dans l'une quelconque des revendications précédentes, dans lequel l'élément de commutation (17) est un transistor.

7. Chargeur sans fil (1) tel que revendiqué dans l'une quelconque des revendications précédentes, dans lequel le circuit de chargeur sans fil (4) est conçu pour délivrer une puissance de 10 W à 20 W.

8. Chargeur sans fil (1) tel que revendiqué dans l'une quelconque des revendications précédentes, dans lequel le circuit de commande (8) comprend un régulateur shunt programmable (19).

9. Véhicule comprenant un chargeur sans fil (1) tel que revendiqué dans l'une quelconque des revendications 1 à 8.

10. Procédé pour faire fonctionner un chargeur sans fil (1) tel que revendiqué dans l'une quelconque des revendications 1 à 8, dans lequel le chargeur sans fil (1) comprend un connecteur d'alimentation en énergie (2), un convertisseur abaisseur principal (3) pour alimenter un circuit de chargeur sans fil (4), un circuit de commande (8) pour commander le circuit de chargeur sans fil (4) et le convertisseur abaisseur principal (3), un circuit intégré (7) pour alimenter le circuit de commande (8), où un connecteur d'entrée du convertisseur abaisseur (5) est connecté au connecteur d'alimentation en énergie (2) et un connecteur de sortie du convertisseur abaisseur (6) est connecté à un connecteur d'entrée du circuit intégré (9) par l'intermédiaire d'une diode série 18), **caractérisé en ce que** le connecteur d'entrée du circuit intégré (9) est connecté au connecteur d'alimentation en énergie (2) par l'intermédiaire d'un élément de commutation (17), et l'élément de commutation (17) est commandé par le circuit de commande (8) selon les étapes suivantes :
- vérifier si un critère ON ou un critère OFF est satisfait (S1);
- mettre dans l'état OFF l'élément de commutation (17) par le circuit de commande (8) lorsque le critère OFF est satisfait (S2) ; et
- mettre l'élément de commutation (17) dans l'état ON par le circuit de commande (8) lorsque le critère ON est satisfait,
où :
et le critère OFF comprend qu'une tension de sortie du convertisseur abaisseur principal (V_OUT) soit supérieure à une valeur seuil prédéfinie (V_TH), et
le critère ON comprend que la tension de sortie du convertisseur abaisseur principal (V_OUT) soit inférieure à la valeur seuil prédéfinie (V_TH).
